# EUROPEAN PATENT APPLICATION

(11) **EP 4 637 042 A1**
(43) Date of publication of application: **22.10.2025**
(21) Application number: 24171278.5
(22) Date of filing: 19.04.2024
(51) Int. Cl.: H04B 7/04, H04B 7/06

(54) **WIRELESS COMMUNICATION SYSTEM AND METHOD UTILIZING SPATIAL AND SPECTRAL MULTIPLEXING AIDED BY BEAM SQUINTING**

(71) Applicant: IHP GmbH - Innovations for High Performance Microelectronics / Leibniz-Institut für innovative Mikroelektronik, 15236 Frankfurt (Oder) (DE)
(72) Inventor: Grass, Eckhard, 15236 Frankfurt (Oder) (DE); Maletic, Nebojsa, 15236 Frankfurt (Oder) (DE)
(74) Representative: Eisenführ Speiser

(57) **Abstract**

A wireless communication system (100) and a method for operating the system is suggested. The wireless communication system comprises a transmitter (112) for generating a high frequency transmit signal having a defined carrier frequency and bandwidth. The transmit signal is modulated according to a modulation method using multiple sub-carriers with different subcarrier frequencies. The transmission signal is emitted by a phase array antenna (113) at a selectable emission angle (steering vector). The actual emission angle is frequency dependent, such that transmit signal spectral components at a lower edge of the bandwidth are deflected differently than transmitter signal portions at a higher edge of the bandwidth. The system further comprises a reflection device (119) with multiple adjustable reflective areas (121a-d). The sub-carriers of the transmission signal are received at different adjustable reflective areas and reflected by the reflective areas into divergent directions enabling reception at different reception points.

## Description

### Field

The present disclosure applies to a wireless communication system utilizing beam squinting to increase its transmission capacity and a method for operating such wireless communication system.

### Background

The upcoming sixth generation (6G) mobile communication system will utilize very high frequencies up to 140 GHz and beyond enabling high data rates at the expense of a limited range. Many antennas are required to guarantee a good geographical coverage of the wireless communication system. To further compensate the limited range of the high-frequency transmission signals, the antennas will apply beamforming with phased array antennas to direct their transmission signal to a reception point where the signal is needed. In the present description the terms "transmission signal", "antenna beam", and "radio beam" are used synonymously. Phased array antennas suffer from beam squinting, i.e. the emission angle of the transmission signal is frequency dependent because the phased array antennas apply phase shifted signals to individual antenna elements of the phased array antenna. Since the phase shift is equivalent to a frequency dependent delay, the emission angle is frequency dependent as well, which leads to defocusing of the antenna beam, i.e. the antenna beam becomes divergent as a function of frequency which will be explained in greater detail below. The beam squint effect is aggravated with increasing deflection angle of the antenna beam emitted by the phased array antenna.

Furthermore, in the 6G mobile communication system, reconfigurable intelligent surfaces (RIS) will be employed to reflect transmission signals emitted by an antenna if obstacles in the line of sight between a base station and a user equipment device prevent direct transmission. The term "radio beam" is used for an antenna beam emitted by an antenna and for an antenna beam reflected by an RIS. Beam squinting occurs also at the surface of the RIS, but this is not subject to this invention.

The unfavourable result of beam squinting both at the phased array antenna of the base station and at the RIS is an undesirable loss of energy at the receiver side of the transmission signal. The receiver may be for instance a user equipment device such as a smart phone or any other portable user device.

US 2023/0180020 A1 describes a wireless communication system comprising a base station with an antenna array. The base station emits a transmission signal to an RIS device, which reflects the transmission signal towards user equipment devices. The transmission signal is subject to beam squinting on the level of the antenna array of the base station and on the level of the RIS device. US 2023/0180020 A1 addresses the problem of beam squinting caused by the RIS device and makes suggestions how to mitigate beam squinting.

In view of the limitations of existing wireless communication systems there remains a desire to overcome or at least improve one or more of the problems mentioned at the outset.

### Description of the invention

According to a first aspect the present disclosure suggests a wireless communication system comprising a transmitter generating a high frequency, wideband transmit signal having a defined carrier frequency and frequency bandwidth. The transmit signal is modulated according to a modulation method using multiple sub-carriers with different subcarrier frequencies. The transmitter is connected with multiple antenna elements forming a phased array antenna configured to transmit the transmission signal at a selectable emission angle. The emission angle is frequency dependent, such that transmit signal spectral components at a lower edge of the bandwidth are deflected differently than transmit signal portions at a higher edge of the bandwidth. The system comprises a reflection device with multiple adjustable reflective areas. The sub-carriers of the transmission signal are received at different adjustable reflective areas. The reflective areas of the reflection device (RIS) steer the subcarrier signals of the transmission signal into divergent directions enabling reception at different reception points, associated with positions of potential users.

The wireless communication system according to the present disclosure aims in a first step at resolving the frequency spectrum of the transmission signal into different emission angles resulting in a divergent emission of the transmission signal. Consequently, subcarriers of the transmission signal having different frequencies are transmitted in a divergent manner forming divergent subcarrier beams/signals. In a second step, the divergent subcarrier beams are reflected at different angles by a RIS to steer the subcarrier signals into divergent directions enabling reception of the subcarrier signals at different reception points where user equipment devices are located. In conclusion, the proposed wireless communication system enables realizing spectral and spatial multiplexing of a transmission signal, which is particularly advantageous for multicarrier transmission methods such as Orthogonal Frequency Division Multiplexing (OFDM) and Orthogonal Frequency Division Multiple Access (OFDM-A). The targeted use of the beam squinting effect of phased array antennas initially splits a broadband signal into frequency ranges that are locally close to each other. Similar to a prism, the electromagnetic spectrum is locally separated into different spectral ranges. With the help of the RIS, these frequency ranges can then be further distributed independently of each other. The RIS are positioned in such a way that they are hit by the intended spectral ranges. A major advantage of this method is that the capacity-increasing effect of the RIS can be used efficiently, and the negative influence of the beam squinting effect is mitigated. As a result, a base station can serve more user equipment devices.

In a useful embodiment the transmitter receives a digital signal stream. The transmitter is configured to divide the digital signal stream into several digital sub-streams and to modulate each digital sub-stream onto one subcarrier. The total data rate of the wireless transmission system may be increased in this way.

In a preferred embodiment the reflection device is formed by a reconfigurable intelligent surface (RIS) device comprising a controller for adjusting the reflection angle of the multiple reflective areas. The controller enables adjusting the reflection angle of each reflective area individually and thus enables directing subcarrier signals towards different reception points.

Preferably, the system further comprises user equipment devices and/or reception antennas located at the different reception points. The user equipment devices and/or reception antennas are configured to receive one or several subcarrier signals carrying one of the sub-streams.

Advantageously, the transmission signal is an OFDM or OFDM-A modulated signal. These modulation methods permit high data rates, efficient subcarrier separation and a stable transmission.

In an advantageous embodiment the user equipment devices are configured to provide a feedback signal to the controller of the reflection device to adjust the reflective areas of the reflection device to optimize reception strength of the transmission signal. The adjustment of the reflective areas can be performed dynamically in order to track a moving user equipment device such as a smart phone in a car.

In an alternative embodiment the reflective device is composed of several reflection devices, each one having a set of reflective areas and an associated controller. Multiple reflection devices permit reflection of transmission signals that cover a wide area that is larger than a single reflection device.

In a further advantageous embodiment, the reflection device directs several reflected lobes towards one single user equipment device. Every subcarrier can carry a certain amount of data. If a user equipment device requires a data rate that cannot be transmitted by a single subcarrier, then the user equipment device can send a request back to the controller of the reflection device and the base station such that the user equipment device receives a higher data rate. This can be an advantage in real-time video applications.

According to a second aspect the present disclosure suggests a method for operating a wireless communication system according to one of the preceding claims, wherein the method comprises
- generating a high frequency, wideband transmission signal having a defined frequency bandwidth,
- modulating the transmitter signal using multiple sub-carriers with different subcarrier frequencies,
- emitting the modulated transmission signal by means of the phased array antenna such that transmit signal spectral components at the edges of the signal bandwidth are deflected more than those components close to the carrier frequency,
- reflecting the subcarrier signals at different adjustable reflective areas of a reflection device (RIS), and
- steering the reflected subcarrier signals into divergent directions enabling reception at different reception points.

The method according to the second aspect of the present disclosure is apt for realizing the advantages that have been described in connection with the wireless transmission system according to the first aspect of the present disclosure.

In a useful development the method further comprises providing a feedback signal to a controller of the reflection device (RIS) to adjust the reflective areas of the reflection device to optimize reception strength of the transmission signal. A high signal strength of the reception signal typically relates with a reliable data transmission and low error rates.

In an advantageous embodiment further comprising directing several reflected subcarrier signals towards one single user equipment device. This embodiment of the method is particularly useful when high data rates are to be transmitted to one user equipment device. In particular, if the transmission signal is an OFDM modulated signal, all subcarriers are directed to a single reception point that may be a smart phone or any other reception device.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: an illustration of the principle of the wireless communication system according to the present disclosure;
- Fig. 2A: a frequency dependent emission characteristics of a phased array antenna;
- Fig. 2B: divergence of the transmission signal of a phased array antenna as a function of the emission angle; and
- Fig. 3: a schematic block diagram of a method for operating a wireless communication system according to the present disclosure.

### Detailed description

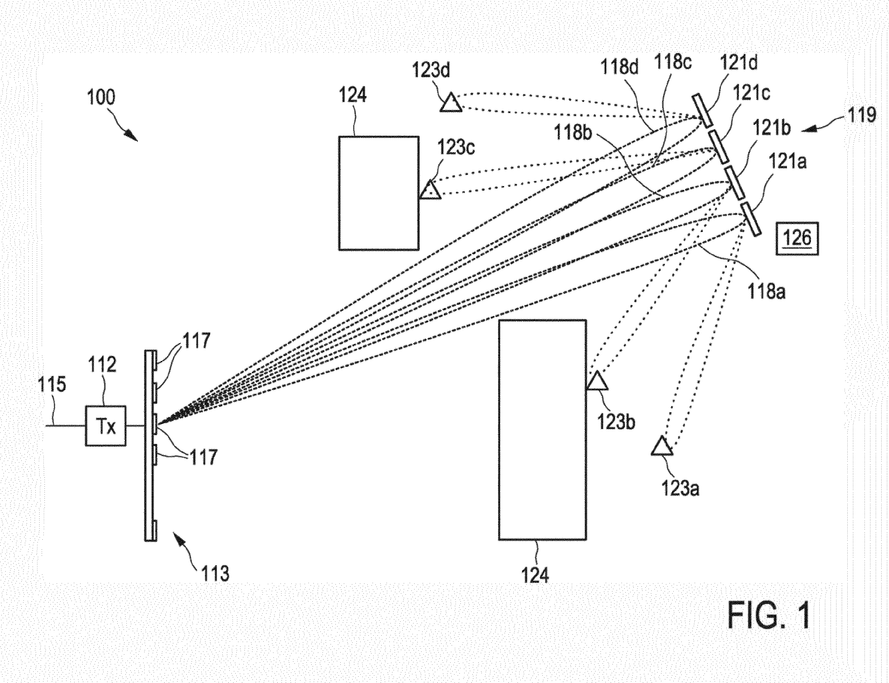

Figure 1 shows a schematic illustration of a wireless communication system 100 according to the present disclosure in a top view onto the wireless communication system 100. The system 100 comprises a base station 110 that encompasses a remote radio head as transmitter 112 and a phased array antenna 113. The transmitter 112 is typically located at the top of a radio mast and is connected with a data connection 115 providing a digital data stream to the transmitter 112. The transmitter 112 generates a high frequency signal which is modulated to carry the digital data stream to form a high frequency electromagnetic wave. The high-frequency electromagnetic wave uses multicarrier modulation such as Orthogonal Frequency-Division Multiplexing (OFDM) or OFDM-A (Orthogonal Frequency Division Multiple Access), which is a specialized implementation of multicarrier modulation used for digital data transmission. OFDM employs multiple orthogonal subcarriers for transmitting digital data. Each subcarrier is separately modulated, carrying information of one or more bits per symbol. The subcarriers are orthogonal in frequency. The difference between OFDM and OFDM-A is that OFDM-A distributes the frequency spectrum into several subcarriers, which are assigned to different users.

The OFDM or OFDM-A modulated transmission signal is provided in parallel to multiple antenna elements 117 of the phased array antenna 113 for emission. In the signal path of each antenna element 117 a phase shift is applied enabling adjustment of an emission angle in which the phased array antenna radiates its strongest signal (main lobe). The transmitter signal is composed of the waveforms emitted by the multiple antenna elements 117. The phased array antenna 113 emits in a horizontal plane but the emission angle may vary in an azimuth direction for example between 0° and ±60°, wherein 0° corresponds to a normal direction relative to the plane of the phased array antenna 113. In the situation shown in Figure 1, the emission angle amounts to approximately 30°. In the exemplary embodiment of Figure 1 the transmission signal is composed of four subcarriers forming four divergent lobes 118a-d. The lobes 118a-d are directed towards a reconfigurable intelligent surface (RIS) 119 comprising four sub-surfaces of reflective areas 121a-d. In other embodiments the RIS 119 may have less or more than four reflective areas. Each reflective area 121a-d reflects one lobe impinging on its surface. The four different reflective areas 121a-d of the RIS are configured such that each lobe 118a-d is reflected at different reflection angles creating reflected lobes 122a-d. The reflected lobes 122a-d are directed by the reflective areas 121a-d to user equipment 123a-d at different locations. The user equipment 123a-d is for example a smart phone or a fixed receiver antenna. The different locations of the user equipment 123a-d represent different reception points that cannot be reached directly because there are blocking obstacles 124, for instance a building, in the line of sight between the phased array antenna 113 and the user equipment 123a-d. The user equipment may be configured to provide feedback to a controller 126 of the RIS 119 to initiate adjustment of the respective reflective areas 121a-b to optimize reception strength of the transmission signal at the reception point. In the use case shown in Figure 1, the transmission signal is an OFDM-A modulated signal in which the subcarriers are assigned to different users, namely the user equipment devices 123a-d.

In other words: The wireless communication system 100 can serve simultaneously several user equipment devices with a single phased array antenna 113 by utilizing beam squinting and an RIS 119. After spectral splitting of the transmission signal into several subcarrier antenna lobes 118a-d by the phased array antenna 113 of the base station 110 using the beam squinting effect, the antenna lobes 118a-d are reflected by the RIS 119 and directed to individual user equipment devices 123a-d.

The RIS device 119 may be composed of multiple RIS devices each one having a set of reflective areas and an associated controller. The multiple RIS devices are positioned in such a way that only a certain spectral range reaches one of the multiple RIS devices. This spectral range is then forwarded to one or more user equipment devices. When using the OFDM-A method, the forwarded spectral range can be a group of neighbouring subcarriers.

A major advantage of the wireless communication system 100 according to the present disclosure is that the capacity-increasing effect of the RIS device 119 can be used efficiently, and the beam squinting effect has no negative influence.

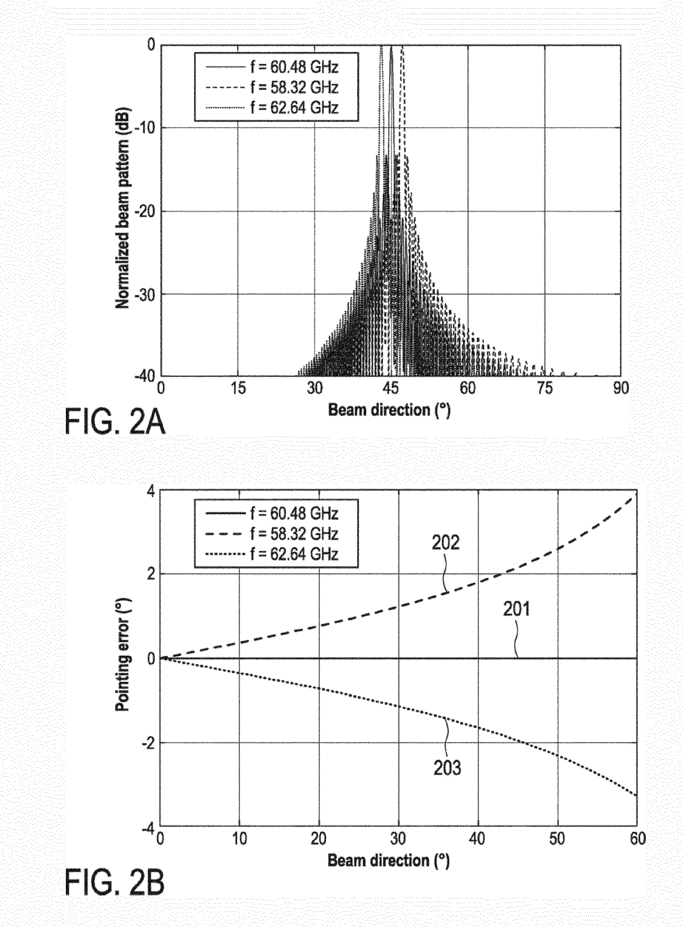

Figure 2A illustrates an example of the beam squinting effect. Figure 2A relates to a transmission signal having a centre frequency of 60.48 GHz and bandwidth of 4.32 GHz. The transmission signal is emitted by the phased array antenna comprising 256 antenna elements. The emission angle of the main lobe associated with the centre frequency is 45°. In the diagram shown in Figure 2A the beam direction is plotted on the X axis and the normalized beam pattern on the Y axis in dB. Thus, the peak of the emission signal at 60.48 GHz amounts to 0 dB at 45°. The lower edge frequency is 58.32 GHz and the upper edge frequency is 62.64 GHz. The peak of the emission signal, i.e. the main lobe of the lower edge frequency 58.32 GHz is at 47.2° and the main lobe of the upper edge frequency of 62.64 GHz is at 43°. The entire bandwidth is distributed over a range of 4.2°, which corresponds to a spatial span of 14.7 m at a distance of 200 m.

Figure 2B illustrates the dependency of the magnitude of the beam squinting effect as a function of the emission angle in degrees of the main lobe associated with 60.48 GHz centre frequency. The emission angle of the main lobe is plotted on the X axis. The Y axis indicates a pointing error in degrees. Obviously, the pointing error of the centre frequency shown as a line 201 is constantly at 0° regardless of the beam direction of the centre frequency because this is the reference versus which the pointing error is determined. Upper line 202 exhibits a pointing error for a 58.32 GHz lower edge frequency. The magnitude of the pointing error is steadily increasing as a function of the beam direction increasing from 0 to 60°. The sign of the pointing error for the lower edge frequency is positive, which means that the emission angle of the main lobe of the lower edge frequency is systematically larger than the emission angle of the main lobe of the 60.48 GHz centre frequency.

In contrast to that, lower line 203 exhibits a pointing error for a 62.64 GHz upper edge frequency. The magnitude of the pointing error is steadily increasing as a function of the beam direction increasing from 0 to 60°. The sign of the pointing error for the upper edge frequency is negative, which means that the emission angle of the main lobe of the upper edge frequency is systematically smaller than the emission angle of the main lobe of the 60.48 GHz centre frequency.

For the sake of completeness, it is noted that Figure 2B displays a pointing error of about ± 2° for the lower and upper edge frequency, respectively, at a steering angle of 45° as it is shown in Figure 2A in a different presentation.

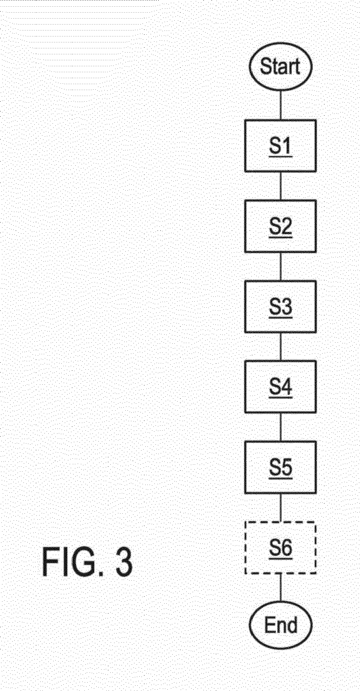

Figure 3 is a schematic flow diagram of a method for operating a wireless communication system according to the present disclosure. The method comprises generating (step S1) a transmission signal having a predefined carrier frequency and bandwidth by means of a transmitter 112. In a next step S2, the transmit signal is modulated using multiple subcarriers with different subcarrier frequencies. In step S3 the modulated transmission signal is emitted by means of the phased array antenna such that the transmitter signal's spectral components at the edges of the signal bandwidth are deflected more than those components close to the carrier frequency. In step S4 the subcarrier signals are reflected at different adjustable reflective areas of the RIS device 119 and are steered by the RIS device 119 into divergent directions enabling reception of the subcarrier signals at different reception points. In this way it is possible to serve a plurality of user equipment devices 123a-d at the different reception points.

In one embodiment the method further comprises providing in an optional step S6 a feedback signal to a controller of the RIS device 119 to adjust the reflective areas 121a-d of the RIS device 119 to optimize reception strength of the reflected signal. Since step S6 is optional, it is shown in Figure 3 with dashed lines only.

The wireless communication system and a method for operating the system makes targeted use of beam squinting in order to combine spatial and spectral multiplexing for increasing data transmission capacity of wireless data transmission. The concept of the present disclosure is particularly suitable for multi-carrier transmission methods such as OFDM or OFDM-A.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: Wireless communication system
- 110: Base station
- 112: Transmitter
- 113: Phased array antenna

- 115: Data connection
- 116: Powerline
- 117: Antenna element
- 118a-d: Lobes
- 119: RIS

- 121a-d: Reflective areas (sub-surfaces) of RIS
- 122a-d: Reflected lobes
- 123a-d: User equipment devices
- 124: Obstacle

- 126: Controller

- 201: Pointing error centre frequency
- 202: Pointing error lower edge frequency
- 203: Pointing error upper edge frequency
- S1-S6: Method steps

## Claims

1. Wireless communication system (100) comprising a transmitter (112) generating a high frequency transmit signal having a defined carrier frequency and bandwidth, wherein the transmit signal is modulated according to a modulation method using multiple sub-carriers with different subcarrier frequencies, wherein the transmitter (112) is connected with multiple antenna elements (117) forming a phased array antenna (113) configured to transmit the transmission signal at a selectable emission angle, wherein the emission angle is frequency dependent, such that transmit signal spectral components at a lower edge of the bandwidth are deflected differently than transmit signal portions at a higher edge of the bandwidth, **characterized in that**
the system comprises a reflection device (119) with multiple adjustable reflective areas (121a-d), wherein sub-carriers of the transmission signal are received at different adjustable reflective areas, and
that the reflective areas (121a-d) of the reflection device (119) steer the subcarrier signals of the transmission signal into divergent directions enabling reception at different reception points.

2. Wireless communication system according to claim 1, wherein the transmitter (112) receives a digital signal stream, and wherein the transmitter is configured to divide the digital signal stream into several digital sub-streams and to modulate each digital sub-stream onto one or several subcarrier(s).

3. Wireless communication system according to claim 1 or 2, wherein the reflection device (119) is formed by a reconfigurable intelligent surface comprising a controller (126) for adjusting the reflection angle of the multiple reflective areas (121a-d).

4. Wireless communication system according to one of the preceding claims, wherein the system further comprises user equipment devices (123a-d) and/or reception antennas located at the different reception points.

5. Wireless communication system according to one of the preceding claims, wherein the transmission signal is an OFDM or OFDM-A modulated signal.

6. Wireless communication system according to one of claims 3 to 5, wherein the user equipment devices (123a-d) are configured to provide a feedback signal to the controller (126) of the reflection device (119) to adjust the reflective areas (121a-d) of the reflection device (119) to optimize reception strength of the transmission signal.

7. Wireless communication system according to one of the preceding claims, wherein the reflective device (119) is composed of several reflective devices, each one having a set of reflective areas (121a-d) and an associated controller (126).

8. Wireless communication system according to one of the preceding claims, wherein the reflective device (119) directs several reflected lobes (118a-d) towards one single user equipment device (123a-d).

9. Method for operating a wireless communication system according to one of the preceding claims, wherein the method comprises
- generating (S1) a transmission signal having a defined carrier frequency and bandwidth,
- modulating (S2) the transmit signal using multiple sub-carriers with different subcarrier frequencies,
- emitting (S3) the modulated transmission signal by means of the phased array antenna such that transmitter signal components at the edges of the signal bandwidth are deflected differently than those components close to the carrier frequency,
- reflecting (S4) the subcarrier signals at different adjustable reflective areas of the reconfigurable intelligent surface device, and
- steering (S5) the reflected subcarrier signals into divergent directions enabling reception at different reception points.

10. Method according to claim 9, further comprising
- providing (S6) a feedback signal to a controller of the reconfigurable intelligent surface device to adjust the reflective areas of the reconfigurable intelligent surface device to optimize reception strength of the transmission signal at the reception points.

11. Method according to claim 9 or 10, further comprising directing several reflected subcarrier signals towards one single user equipment device.
